Europäisches Patentamt

European Patent Office

Office européen des brevets

(19)

(11) Veröffentlichungsnummer: **0 134 905**
**B1**

(12) **EUROPÄISCHE PATENTSCHRIFT**

(45) Veröffentlichungstag der Patentschrift:
24.05.89

(51) Int. Cl.⁴: **F 02 B 41/10,** F 01 K 23/14,
F 02 C 5/00, F 02 C 6/00

(21) Anmeldenummer: 84106048.6

(22) Anmeldetag: 28.05.84

(54) Antriebsaggregat, insbesondere für Kraftfahrzeuge.

(30) Priorität: 27.07.83 DE 3326992

(43) Veröffentlichungstag der Anmeldung:
27.03.85 Patentblatt 85/13

(45) Bekanntmachung des Hinweises auf die Patenterteilung:
24.05.89 Patentblatt 89/21

(84) Benannte Vertragsstaaten:
BE CH DE FR GB IT LI NL SE

(56) Entgegenhaltungen:
AT-B- 138 943
CH-A- 168 230
DE-A- 2 757 236

(73) Patentinhaber: **Dr.Ing.h.c. F. Porsche
Aktiengesellschaft, Porschestrasse 42,
D-7000 Stuttgart 40 (DE)**

(72) Erfinder: **Striebich, Helmut, Dipl.-Ing.,
Max-Beckmann-Strasse 25, D-7500 Karlsruhe 41 (DE)**

ACTORUM AG

## Beschreibung

Die Erfindung betrifft ein Antriebsaggregat, insbesondere für Kraftfahrzeuge, mit einer Brennkraftmaschine und einer, die in den Abgasen der Brennkraftmaschine enthaltenen Energien nutzenden Abwärmeturbineneinheit, die eine von den Abgasen der Brennkraftmaschine beaufschlagte Abgasturbine sowie eine weitere Turbineneinheit umfaßt, wobei der weiteren Turbineneinheit über eine Zuführeinrichtung und einen in den Abgasturbine enthaltenen, wärmeabgebenden Leitungsabschnitt ein Medium zuführbar ist, das in der weiteren Turbineneinheit unter Leistungsabgabe expandiert, und wobei die Abwärmeturbineneinheit mit einem rotierenden, als Hohlkörper ausgebildeten Zylinder versehen ist, der an seiner Außenseite eine den Abgasen ausgesetzte Beschaufelung für die Abgasturbine trägt.

Bei einem bekannten Antriebsaggregat (DE-PS 2 757 236) der eingangs beschriebenen Bauart haben Untersuchungen gezeigt, daß eine Nutzung der in den Abgasen der Brennkraftmaschine innewohnenden Energien grundsätzlich realisierbar ist. Allerdings scheinen die Art der Abwärmeturbineneinheit, die Zuführung des Mediums, seine Umwandlung in Dampf und letztlich die einen guten Wirkungsgrad sicherstellende Nutzung des Dampfs optimierbar.

Aufgabe der Erfindung ist es daher, dieses Antriebsaggregat so zu verbessern, daß es betriebssicher ist und unter Verwendung leicht herstellbarer Bauteile einen guten Wirkungsgrad liefert.

Erfindungsgemäß wird diese Aufgabe durch die kennzeichnenden Merkmale des Anspruchs 1 gelöst. Weitere, die Erfindung ausgestaltende Merkmale sind in den nachfolgenden Ansprüchen enthalten.

Die mit der Erfindung hauptsächlich erzielten Vorteile sind darin zu sehen, daß die Abwärmeturbineneinheit mit einem relativ hohen Wirkungsgrad arbeitet und ein kompaktes Aggregat ist, in dem die Nutzung der im Abgas enthaltenen Energien gut realisierbar ist. Durch die Beschaufelung des rotierenden Zylinders entsteht eine relativ große Oberfläche, was neben guter Wärmeübergangszahlen wichtig für den übertragbaren Wärmestrom ist. Hieraus folgt ein günstiges Gewicht-Oberflächen-Verhältnis des Zylinders. Durch die Art der Zuführung des flüssigen Mediums an die Innenwand des Zylinders wird eine Filmverdampfung erreicht, mit der eine hohe Wärmeübergangszahl und eine gute Kühlung des Zylinders einhergehen. Auch wird dadurch das Temperaturniveau niedrig gehalten, so daß hochtemperaturfeste Turbinenwerkstoffe entfallen; für den Zylinder kann eine Aluminium-Legierung verwendet werden.

Das Gehäuse, es kann bei entsprechender Innenbeschichtung ebenfalls aus einer Aluminium-Legierung hergestellt sein, der Zylinder und die Dampfturbineneinheit sind Bauteile, die problemlos gefertigt werden können. Auch lassen sie sich größenmäßig so dimensionieren und räumlich so zueinander anordnen, daß die Abwärmeturbineneinheit eine auf einfache Weise an der Brennkraftmaschine anbaubare, kompakte Einheit darstellt.

Die Beschaufelung, die den Abgasen ausgesetzt ist, ist lediglich im Bereich des Abgaseintritts vorgesehen, was fertigungstechnisch leicht zu realisieren ist und zur Gewichtsreduktion beiträgt. Eine gute Antriebsfunktion des Zylinders wird erreicht, wenn die Beschaufelung an zwei beabstandeten Radkränzen vorgesehen ist und diese tangential beaufschlagt werden. Diese Radkränze können entweder einstückig mit den Zylindern hergestellt sein oder aber auch durch separate Teile gebildet werden.

Eine gute Zuführung des flüssigen Mediums wird über die Zerstäubungsdüsen und die Zentrifugalpumpe erreicht. Letztere kann auf einfache Art und Weise in den Zylinder integriert werden.

Der innerhalb des Zylinders vorgesehene Überhitzer unterstützt einen guten Wirkungsgrad der Dampfturbineneinheit. Die Verwendung der gegenläufigen Turbinenräder und ihre Ausbildung gewährleistet eine gute Funktion der Dampfturbineneinheit.

Wird der Dampfturbineneinheit ein in das Gehäuse installierter Mischkondensator nachgeschaltet, so kann ein zusätzlicher Kondensator entfallen.

Zur Funktionsoptimierung trägt auch bei, wenn die Leitung, die zur Einrichtung führt, von den Abgasen vorgewärmt wird.

Schließlich stellt die Regelvorrichtung einen sicheren und wirkungsvollen Betrieb der Abwärmeturbineneinheit sicher.

In der Zeichnung wird ein Ausführungsbeispiel der Erfindung gezeigt, das nachstehend näher beschrieben wird. Es zeigt:

Fig. 1 ein Blockschaltbild des erfindungsgemäßen Antriebsaggregats,

Fig. 2 einen Schnitt nach der Linie II–II der Fig. 1 in größerem Maßstab,

Fig. 3 einen Schnitt nach der Linie III–III der Fig. 2,

Fig. 4 ein Diagramm, mit dem eine Regelfunktion des erfindungsgemäßen Antriebsaggregats erläutert wird,

Fig. 5 eine Einzelheit bei X der Fig. 1 in größerem Maßstab.

Das Antriebsaggregat 1, das in ein Kraftfahrzeug eingebaut sein kann oder aber im stationären Betrieb (Energieversorgung) arbeitet, umfaßt eine Brennkraftmaschine 2 und eine Abwärmeturbineneinheit 3. Die Abwärmeturbineneinheit 3 ist an Auslaßkanäle 4 der Brennkraftmaschine 2 angeschlossen. Sie wird also von Abgasen der beispielsweise vier Zylinder umfassenden Brennkraftmaschine 2 beaufschlagt. Mit 5 ist eine Abgasleitung bezeichnet, die Bestandteil der Abwärmeturbineneinheit 3 ist.

Die Abwärmeturbineneinheit dient zur Nutzung der im Abgas der Brennkraftmaschine 2 innewohnenden Energien, wobei die gewonnene Leistung – sie kann zur Leistungssteigerung oder zur Verbrauchsreduktion eingesetzt werden – bei 6 und 7 der Brennkraftmaschine 2, vorzugsweise deren Kurbelwelle 8, zugeführt wird. Zwischen Kurbelwelle 8 und Abwärmeturbineneinheit 3 sind bei 9 und 10 Getriebe vorgesehen.

Die Abwärmeturbineneinheit 3 umfaßt einen rotierenden, als Hohlkörper ausgebildeten Zylinder 11 und eine diesem nachgeschaltete Dampfturbineneinheit 12, die in einem Gehäuse 14 angeordnet sind, wobei der Dampfturbineneinheit 12 ein Kondensator 13 nachgeschaltet ist. Mit einer Einrichtung 15 wird dem Zylinder 11 flüssiges Medium zugeführt, das verdampft und unter Leistungsabgabe in der Dampfturbineneinheit 12 expandiert. Das flüssige Medium kann dem Kühlmittel der Brennkraftmaschine entnommen werden.

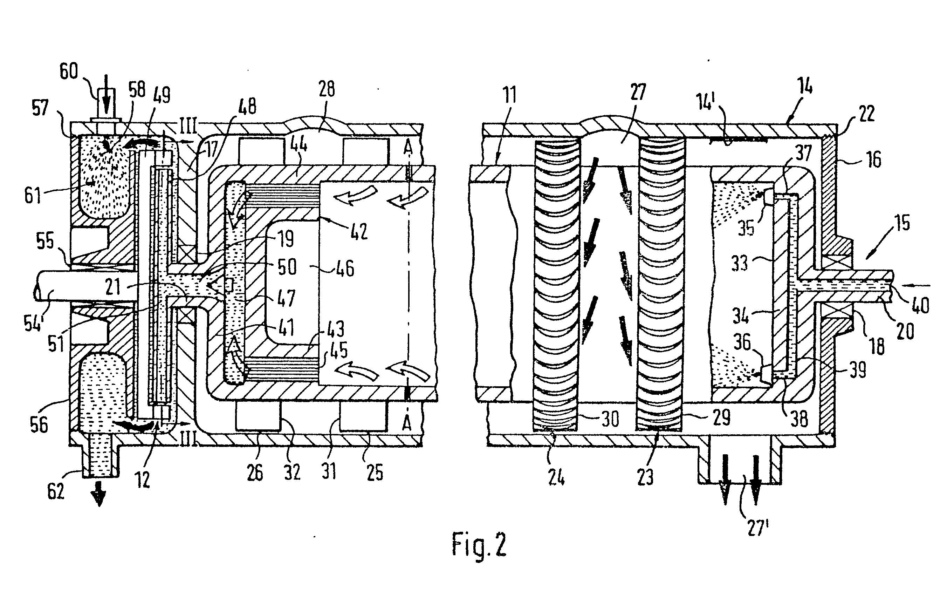

Das Gehäuse 14 weist Querwandungen 16, 17 auf (Fig. 2), die mit Lagern 18, 19 für Lagerwellen 20, 21 des Zylinders 11 – er kann aus zwei Teilen hergestellt sein, die in der Ebene A–A zusammengesetzt sind; möglich ist auch, einen rohrförmigen, an den Stirnseiten mit Einsätzen versehenen Körper zu verwenden – versehen sind. Die Querwandung 16 ist ein separates Bauteil und mittels eines Gewindes 22 am Gehäuse 14 gehalten.

An der Außenseite des aus einer Leichtmetall-Legierung bestehenden Zylinders 11 sind Beschaufelungen 23, 24, 25, 26 angeordnet, die von den Abgasen der Brennkraftmaschine 2 beaufschlagt werden. Die Abgase treten bei 27 aus dem Gehäuse 14 aus. Das Gehäuse 14 kann ebenfalls aus einer Leichtmetall-Legierung bestehen, wobei es dann an seiner Innenseite mit einer Beschichtung 14' aus temperaturfestem Werkstoff wie Keramik versehen ist.

Die Beschaufelungen 23, 24, 25, 26 sind im Bereich 27, 28 des Eintritts der Abgase vorgesehen, wobei sie Bestandteil von Radkränzen 29, 30, 31, 32 sind, die aus einem Stück mit dem Zylinder 11 (Gießverfahren) hergestellt sein können. Es ist auch möglich, diese Radkränze als separate Bauteile zu fertigen und sie dann durch Aufschrumpfen oder einem anderen geeigneten Verfahren zu befestigen. Im Ausführungsbeispiel wird das Abgas zwischen zwei beabstandeten Radkränzen, nämlich 29 und 30 bzw. 31 und 32, tangential zugeführt. Denkbar ist auch, lediglich einen Radkranz vorzusehen, dem dann ebenfalls tangential das Abgas zugeführt wird.

Die Einrichtung 15 weist an der Innenseite 33 der einen Stirnwand 34 Zerstäubungsdüsen 35, 36 auf, die an in den Zylinder 11 mündende Kanäle 37, 38 einer in die Stirnwand 34 integrierten Zentrifugalpumpe 39 angeschlossen sind. Diese wird über eine Bohrung 40 in der Lagerwelle 20 mit dem flüssigen Medium versorgt.

Benachbart der anderen Stirnwand 41 ist der Zylinder 11 mit einem Dampfüberhitzer 42 versehen. Der Dampfüberhitzer 42 wird durch einen örtlichen Kern 43 gebildet, der sich in Querrichtung des Zylinders 11 durchgehend erstreckt und benachbart der Außenfläche 44 mehrere oder eine Vielzahl von axial verlaufenden Durchgangsöffnungen 45 aufweist. Auf der der Stirnwand 34 zugewandten Seite ist der Kern aus Gewichtsgründen mit einer trogförmigen Ausnehmung 46 versehen.

Damit das vom Dampfüberhitzer 42 kommende Arbeitsmedium funktionsgerecht der Dampfturbineneinheit zugeführt wird, ist zwischen der Stirnwand 41 und dem Dampfüberhitzer 42 eine Kammer 47 vorgesehen.

Die Dampfturbineneinheit 12, die auf der anderen Seite der Querwandung 17 innerhalb des Gehäuses 14 angeordnet ist, umfasst zwei gegenläufige Turbinenräder 48, 49. Das Turbinenrad 48 ist fest mit der eine Bohrung 50 aufweisenden Lagerwelle 21 des Zylinders 11 verbunden. Die Bohrung 50 ist an Expansionsdüsen 52, 53 – Lavaldüsen – des Turbinenrades 48 angeschlossen, die in Umfangsrichtung C und D wirksam sind. Das Turbinenrad 49 – Radialturbine – umgibt mit seiner Beschaufelung 54 das Turbinenrad 48 und ist mit seiner Lagerwelle 54' unter Zwischenschaltung eines Lagers 55 in einer Schließwand 56 des Gehäuses 14 gelagert.

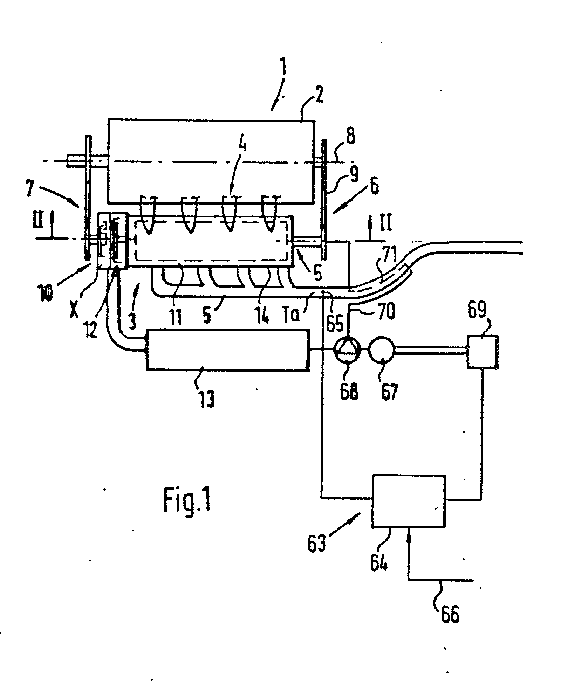

Die Schließwand 56 ist mittels eines Gewindes 57 im Gehäuse 14 gehalten und bildet eine Kammer 58, an die bei 59 eine oder mehrere Kühlmedium-Zerstäubungsdüsen 60 angeschlossen sind und so einen Mischkondensator 61 bildet. Bei 62 tritt Kühlmittel-Kondensatgemisch aus, das zu einem nicht gezeigten Kühler der Brennkraftmaschine geführt wird. Durch diesen Mischkondensator kann der Kondensator 13 (Fig. 1) entfallen.

Die Einrichtung 15 wirkt mit einer Regelvorrichtung 63 zusammen. Die Regelvorrichtung 63 besitzt ein Regelgerät 64, das mit einem Temperaturfühler 65 (Istwertgeber Ta) in der Abgasleitung 5 und einem Sollwertgeber 66, der vom Leistungsregelorgan der Brennkraftmaschine bestimmt wird, verbunden ist. Das Regelgerät 64 ist ferner an einen E-Motor 67 einer Pumpe 68 unter Zwischenschaltung eines Spannungsreglers 69 angeschlossen.

Von der Pumpe 68 führt eine Leitung 70 für flüssiges Medium zur Einrichtung 15. Die Leitung 70 verläuft bei 71 innerhalb der Abgasleitung 5, d.h. sie wird örtlich vom Abgas umströmt, wodurch das Medium vorgewärmt wird.

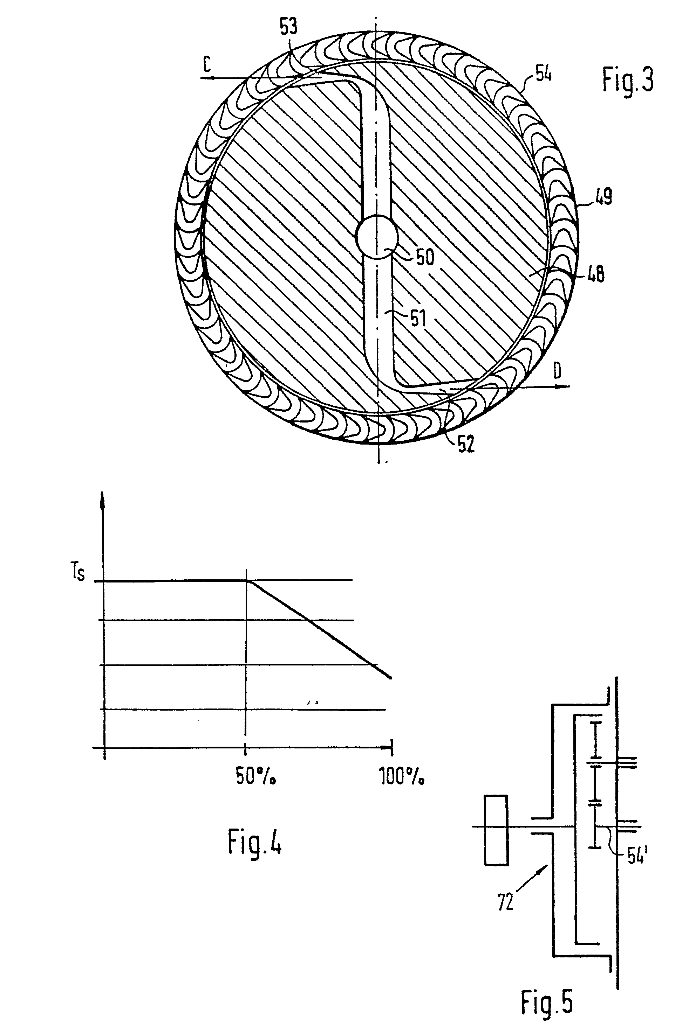

In Fig. 4 ist ein Diagramm zur Erläuterung der Regelfunktion der Regelvorrichtung 63 dargestellt. Dabei ist auf der Ordinate ein Sollwert Ts und auf der Abszisse die Stellung des Leistungsregelungsorgans aufgetragen.

Die Wirkungsweise des Antriebsaggregats ist wie folgt: Im Leerlauf oder bei niedriger Teillast liegt die Abgastemperatur Ta in der Regel niederer als die Sollwerttemperatur Ts. In diesem Zustand ist die Pumpe 68 ausgeschaltet; es wird kein flüssiges Medium dem Zylinder 11 zugeführt, der so als Wärmespeicher wirkt. Wird der Sollwert durch eine entsprechende Stellung (über 50%) des Leistungsregelorgans gesenkt, ist nun die Abgastemperatur Ta höher als die Sollwerttemperatur Ts, so wird die Pumpe 68 drehzahlgesteuert zugeschaltet.

Dadurch wird das flüssige Medium über Zerstäubungsdüsen 35, 36 dem rotierenden Zylinder 11 zugeführt, wo es verdampft (Filmverdampfung), den Dampfüberhitzer 42 passiert und unter Leistungsabgabe in der Dampfturbineneinheit 12 expandiert.

Die Energie, die durch den Abgasstrom erzeugt wird und über die Beschaufelung direkt auf den Zylinder wirkt, wird über das Getriebe 9, das eine Freilaufkupplung aufweisen kann, direkt der Kurbelwelle 8 zugeführt. Das Turbinenrad 49, das die Energie des überlagerten Dampfprozesses überträgt, ist daher bezüglich der Drehrichtung umzukehren, was über ein dem Turbinenrad 49 nachgeschaltetes Planetengetriebe 72 erfolgt. Zwischen dem Planetengetriebe 72 und der Kurbelwelle 8 kann zur Leistungsübertragung ein stufenloses Getriebe verwendet werden.

**Patentansprüche**

1. Antriebsaggregat (1), insbesondere für Kraftfahrzeuge, mit einer Brennkraftmaschine (2) und einer, die in den Abgasen der Brennkraftmaschine (2) enthaltenen Energien nutzenden Abwärmeturbineneinheit (3), die eine von den Abgasen der Brennkraftmaschine (2) beaufschlagte Abgasturbine sowie eine weitere Turbineneinheit (12) umfaßt, wobei der weiteren Turbineneinheit (12) über eine Zuführeinrichtung (15) und einen in der Abgasturbine enthaltenen, wärmeabgebenden Leitungsabschnitt ein Medium zuführbar ist, das in der weiteren Turbineneinheit (12) unter Leistungsabgabe expandiert, und wobei die Abwärmeturbineneinheit (3) mit einem rotierenden, als Hohlkörper ausgebildeten Zylinder (11) versehen ist, der an seiner Außenseite eine den Abgasen ausgesetzte Beschaufelung (23, 24, 25, 26) für die Abgasturbine trägt, dadurch gekennzeichnet, daß der wärmeabgebende Leitungsabschnitt vom Innenraum des Zylinders (11) gebildet wird, daß das Medium in flüssigem Zustand in den Zylinder (11) eintritt und ihn in dampfförmigem Zustand verläßt und daß die weitere Turbineneinheit (12) als Dampfturbineneinheit ausgebildet ist.

2. Antriebsaggregat nach Anspruch 1, dadurch gekennzeichnet, daß der Zylinder (11) von einem Gehäuse (14) umgeben ist, das Lager (18, 19) für diesen aufweist.

3. Antriebsaggregat nach den Ansprüchen 1 und 2, dadurch gekennzeichnet, daß die Dampfturbineneinheit (12) innerhalb des Gehäuses (14) angeordnet ist.

4. Antriebsaggregat nach Anspruch 1, dadurch gekennzeichnet, daß der Zylinder (11) aus einer Leichtmetall-Legierung besteht.

5. Antriebsaggregat nach Anspruch 1, dadurch gekennzeichnet, daß die Beschaufelung (23, 24, 25, 26) lediglich im Bereich (27, 28) des Eintritts der Abgase vorgesehen ist.

6. Antriebsaggregat nach den Ansprüchen 1 und 5, dadurch gekennzeichnet, daß die Beschaufelung (23, 24, 25, 26) an einer Art Radkranz (29, 30, 31, 32) vorgesehen ist.

7. Antriebsaggregat nach den Ansprüchen 5 und 6, dadurch gekennzeichnet, daß pro Eintritt der Abgase zwei im Abstand zueinander angeordnete Radkränze (29 und 30 bzw. 31 und 32) vorgesehen sind, wobei die Zuführung der Abgase zwischen diesen Radkränzen erfolgt.

8. Antriebsaggregat nach den Ansprüchen 6 und 7, dadurch gekennzeichnet, daß die Radkränze (29, 30, 31, 32) aus einem Stück mit dem Zylinder (11) hergestellt sind.

9. Antriebsaggregat nach den Ansprüchen 6 und 7, dadurch gekennzeichnet, daß die Radkränze (29, 30, 31, 32) separate, aus Einzelschaufeln gebildete Bauteile sind.

10. Antriebsaggregat nach Anspruch 1, dadurch gekennzeichnet, daß die Einrichtung (15) zur Zuführung des flüssigen Mediums an der Innenseite des Zylinders (11) Zerstäubungsdüsen (35, 36) aufweist.

11. Antriebsaggregat nach den Ansprüchen 1 und 10, dadurch gekennzeichnet, daß die Einrichtung (15) eine an der einen Stirnwand (34) des Zylinders (11) angebrachte Zentrifugalpumpe (39) umfaßt.

12. Antriebsaggregat nach den Ansprüchen 10 und 11, dadurch gekennzeichnet, daß in den Zylinder (11) mündende Kanäle (37, 38) der Zentrifugalpumpe (39) an die Zerstäubungsdüse (34, 35) angeschlossen sind.

13. Antriebsaggregat nach den Ansprüchen 10 bis 12, dadurch gekennzeichnet, daß die Zentrifugalpumpe (39) in den Zylinder (11) integriert ist.

14. Antriebsaggregat nach den Ansprüchen 1 und 11, dadurch gekennzeichnet, daß der Zylinder (11) benachbart der anderen Stirnwand (41) einen Dampfüberhitzer (42) aufweist.

15. Antriebsaggregat nach Anspruch 14, dadurch gekennzeichnet, daß der Dampfüberhitzer (42) durch einen örtlich vorgesehenen, in Querrichtung des Zylinders (11) sich erstreckenden Kern (43) gebildet wird, der benachbart der Außenfläche (44) des Zylinders (11) mehrere axiale Durchgangsöffnungen (45) aufweist.

16. Antriebsaggregat nach Anspruch 15, dadurch gekennzeichnet, daß der Kern (11) auf der der einen Stirnwand (34) zugewandten Seite mit einer vorzugsweise trogförmigen Ausnehmung (46) versehen ist.

17. Antriebsaggregat nach den Ansprüchen 15 und 16, dadurch gekennzeichnet, daß zwischen der anderen Stirnwand (41) und dem Kern (43) ein Raum (47) vorgesehen ist.

18. Antriebsaggregat nach Anspruch 1, dadurch gekennzeichnet, daß die Dampfturbineneinheit (12) durch zwei gegenläufige Turbinenräder (48, 49) gebildet wird, wovon das erste Turbinenrad (48) mit dem Zylinder (11) verbunden ist sowie in Umfangsrichtung wirkende Expansionsdüsen (52, 53) aufweist und das zweite Turbinenrad (48) als Radialturbine ausgebildet ist, die von der Innenseite aus vom aus den Expansionsdüsen (52, 53) des Turbinenrads (48) ausströmenden Dampf beaufschlagt wird.

19. Antriebsaggregat nach den Ansprüchen 2 und 18, dadurch gekennzeichnet, daß zwischen Zylinder (11) und Dampfturbineneinheit (12) eine trennende Querwand (17) vorgesehen ist, die ein Lager (19) für den Zylinder (11) aufweist.

20. Antriebsaggregat nach den Ansprüchen 2 und 18, dadurch gekennzeichnet, daß benachbart der Dampfturbineneinheit (12) am Gehäuse (14) eine Schließwand (56) angebracht ist, die ein Lager (55) für das zweite Turbinenrad (49) aufweist.

21. Antriebsaggregat nach den Ansprüchen 1, 2, und 18, dadurch gekennzeichnet, daß der Dampfturbineneinheit (12) ein Mischkondensator (61) nachgeschaltet ist.

22. Antriebsaggregat nach Anspruch 21, dadurch gekennzeichnet, daß der Mischkondensator eine im Gehäuse angeordnete Kammer (26) aufweist, die einerseits an wenigstens eine Kühlmedium-Zerstäubungsdüse (60) und andererseits an einen Auslaß (62) für das Kühlmedium-Kondensatgemisch angeschlossen ist.

23. Antriebsaggregat nach Anspruch 1, dadurch gekennzeichnet, daß das flüssige Medium dem Kühlmedium der Brennkraftmaschine entnommen ist.

24. Antriebsaggregat nach den Ansprüchen 1 und 23, dadurch gekennzeichnet, daß eine zur Einrichtung (15) führende Leitung (69) das flüssige Medium zumindest örtlich (70) von Abgasen der Brennkraftmaschine umströmt wird.

25. Antriebsaggregat nach Anspruch 1, dadurch gekennzeichnet, daß die Einrichtung (15) zur Zuführung des Mediums mit einer Regelvorrichtung (63) zusammenwirkt.

26. Antriebsaggregat nach Anspruch 25, dadurch gekennzeichnet, daß die Regelvorrichtung (63) mit einer Pumpe (68) zusammenwirkt.

27. Antriebsaggregat nach den Ansprüchen 25 und 26, dadurch gekennzeichnet, daß die Regelgröße die Abgastemperatur (Ta) am Ausgang der Abwärmeturbineneinheit (3) ist, wobei ein Temperatur-Sollwert (Ts) in Abhängigkeit der Stellung eines Leistungsregelorgans der Brennkraftmaschine vorgegeben wird.

28. Antriebsaggregat nach Anspruch 1, dadurch gekennzeichnet, daß die Leistungsübertragung vom Zylinder zur Brennkraftmaschine (1) direkt und zwischen Dampfturbineneinheit (12) und Brennkraftmaschine unter Zwischenschaltung eines Getriebes (72) erfolgt.

29. Antriebsaggregat nach Anspruch 2, dadurch gekennzeichnet, daß das Gehäuse (14) aus einer Aluminium-Legierung besteht, das an seiner Innenseite mit einer Beschichtung (14') aus temperaturfestem Werkstoff wie Keramik besteht.

**Claims**

1. A drive unit (1), in particular for motor vehicles, with an internal combustion engine (2) and a waste-heat turbine unit (3), which uses the energy contained in the exhaust gases of the internal combustion engine (2) and which comprises an exhaust-gas turbine acted upon by the exhaust gases of the internal combustion engine (2) as well as a further turbine unit (12), it being possible to supply a medium, which expands in the further turbine unit (12) as power is supplied, to the further turbine unit (12) by way of a supply device (15) and a heat-emitting conducting portion contained in the exhaust-gas turbine, and the waste-heat turbine unit (3) being porivided with a rotating cylinder (11) which is constructed as a hollow body and which supports on its outside a blade system (23, 24, 25, 26) subjected to the exhaust gases for the exhaust-gas turbine, characterized in that the heat-emitting conducting portion is formed by the interior of the cylinder (11), the medium enters the cylinder (11) in the liquid state and leaves it in the gaseous state, and the further turbine unit (12) is constructed as a steam turbine unit.

2. A drive unit according to Claim 1, characterized in that the cylinder (11) is surrounded by a housing (14) which comprises bearings (18, 19) therefor.

3. A drive unit according to Claims 1 and 2, characterized in that the steam turbine unit (12) is arranged inside the housing (14).

4. A drive unit according to Claim 1, characterized in that the cylinder (11) consists of a light metal alloy.

5. A drive unit according to Claim 1, characterized in that the blade system (23, 24, 25, 26) is provided only in the region (27, 28) of the entry of the exhaust gases.

6. A drive unit according to Claims 1 and 5, characterized in that the blade system (23, 24, 25, 26) is provided on a sort of toothed rim (29, 30, 31, 32).

7. A drive unit according to Claims 5 and 6, characterized in that two toothed rims (29 and 30 or 31 and 32 respectively) arranged at a distance from one another are provided per entry of the exhaust gases, the exhaust gases being supplied between the said toothed rims.

8. A drive unit according to Claims 6 and 7, characterized in that the toothed rims (29, 30, 31, 32) are produced in one piece with the cylinder (11).

9. A drive unit according to Claims 6 and 7, characterized in that the toothed rims (29, 30, 31, 32) are separate components formed as individual blades.

10. A drive unit according to Claim 1, characterized in that the device (15) for supplying the liquid medium to the inside of the cylinder (11) comprises spray nozzles (35, 36).

11. A drive unit according to Claims 1 and 10, characterized in that the device (15) comprises a centrifugal pump (39) mounted on one end wall (34) of the cylinder (11).

12. A drive unit according to Claims 10 and 11, characterized in that ducts (37, 38) of the centrifugal pump (39) which open into the cylinder (11) are connected to the spray nozzles (35, 36).

13. A drive unit according to Claims 10 to 12, characterized in that the centrifugal pump (39) is integrated in the cylinder (11).

14. A drive unit according to Claims 1 and 11, characterized in that the cylinder (11) comprises a steam superheater (42) adjacent the other end wall (41).

15. A drive unit according to Claim 14, characterized in that the steam superheater (42) is formed by a core (43) which is provided locally and extends in the transverse direction of the cylinder (11) and which comprises a plurality of axial through openings (45) adjacent the outer face (44) of the cylinder (11).

16. A drive unit according to Claim 15, characterized in that the core (11) is provided on the side facing one end wall (34) and having a preferably trough-shaped recess (46).

17. A drive unit according to Claims 15 and 16, characterized in that a space (47) is provided between the other side wall (41) and the core (43).

18. A drive unit according to Claim 1, characterized in that the steam turbine unit (12) is formed by two contrarotating turbine wheels (48, 49), of which the first turbine wheel (48) is connected to the cylinder (11) and comprises expansion nozzles (52, 53) operating in the peripheral direction and the second turbine wheel (49) is constructed as a radial turbine which is acted upon from the inside by steam flowing out of the expansion nozzles (52, 53) of the turbine wheel (48).

19. A drive unit according to Claims 2 and 18, characterized in that a transverse partition wall (17), which comprises a bearing for the cylinder (11), is provided between the cylinder (11) and the steam turbine unit (12).

20. A drive unit according to Claims 2 and 18, characterized in that a closure wall (56), which comprises a bearing (55) for the second turbine wheel (49), is arranged adjacent the steam turbine unit (12) on the housing (14).

21. A drive unit according to Claims 1, 2 and 18, characterized in that a mixing condenser (61) is arranged downstream of the steam turbine unit (12).

22. A drive unit according to Claim 21, characterized in that the mixing condenser comprises a chamber (58) which is arranged in the housing and which is connected on the one hand to at least one cooling-medium spray nozzle (60) and on the other hand to an outlet (62) for the mixture of the cooling medium and the condensate.

23. A drive unit according to Claim 1, characterized in that the liquid medium is removed from the cooling medium of the internal combustion engine.

24. A drive unit according to Claims 1 and 23, characterized in that a duct (69) leading to the device (15) for the liquid medium is traversed at least in places (70) by exhaust gases from the internal combustion engine.

25. A drive unit according to Claim 1, characterized in that the device (15) for supplying the medium cooperates with a regulating device (63).

26. A drive unit according to Claim 25, characterized in that the regulating device (63) cooperates with a pump (68).

27. A drive unit according to Claims 25 and 26, characterized in that the regulating parameter is the exhaust gas temperature (Ta) at the output of the waste-heat turbine unit (3), a temperature nominal value (Ts) being predetermined as a function of the setting of an power control member of the internal combustion engine.

28. A drive unit according to Claim 1, characterized in that the power transmission from the cylinder to the internal combustion engine (1) takes place directly and between the steam turbine unit (12) and the internal combustion engine with the interposition of a gear system (72).

29. A drive unit according to Claim 2, characterized in that the housing (14) consists of an aluminium alloy, and comprises on its inside a coating (14') of temperature-resistant material such as ceramic material.

## Revendications

1. Equipement moteur (1), en particulier pour véhicule automobile, comportant un moteur à combustion interne (2) et une unité de turbine à chaleur perdue (3) utilisant l'énergie contenue dans les gaz d'échappement du moteur (2), qui comprend une turbine à gaz actionnée par les gaz d'échappement du moteur (2) ainsi qu'une autre unité de turbine (12), équipement dans lequel on peut amener à l'autre unité de turbine, par une conduite d'admission (15) et une section de conduite contenue dans la turbine à gaz cédant de la chaleur, un fluide qui se détend dans l'autre unité de turbine (12) en fournissant de l'énergie, et dans lequel l'unité de turbine à chaleur perdue (3) est équipée d'un cylindre (11) rotatif sous la forme d'un corps creux, qui sur son côté extérieur porte une série d'aubages (23, 24, 25, 26) soumise aux gaz d'échappement pour la turbine à gaz, caractérisé en ce que la section de conduite cédant de la chaleur est formée par l'intérieur du cylindre (11), que le fluide pénètre dans le cylindre (11) à l'état liquide et en sort à l'état de vapeur, et que l'autre unité de turbine (12) est constituée d'une unité de turbine à vapeur.

2. Equipement moteur selon la revendication 1, caractérisé en ce que le cylindre (11) est entouré d'un carter (14) qui comporte les paliers (18, 19) pour ce cylindre.

3. Equipement moteur selon les revendications 1 et 2, caractérisé en ce que l'unité de turbine à vapeur (12) est placée à l'intérieur du carter (14).

4. Equipement moteur selon la revendication 1, caractérisé en ce que le cylindre (11) est constitué d'un alliage de métal léger.

5. Equipement moteur selon la revendication 1, caractérisé en ce que la série d'aubage (23, 24, 25, 26) est prévue simplement dans la zone (27, 28) d'admission des gaz d'échappement.

6. Equipement moteur selon les revendications 1 et 5, caractérisé en ce que la série d'aubages (23, 24, 25, 26) est prévue sur une sorte de couronne (29, 30, 31, 32).

7. Equipement moteur selon les revendications 5 et 6, caractérisé en ce que pour l'admission des gaz d'échappement sont prévues couronnes (29 et 30, ou 31 et 32) espacées l'une de l'autre, l'arrivée des gaz d'échappement se faisant entre ces deux couronnes.

8. Equipement moteur selon les revendications 6 et 7, caractérisé en ce que les couronnes (29, 30, 31, 32) sont fabriquées d'une seule pièce avec le cylindre (11).

9. Equipement moteur selon les revendications 6 et 7, caractérisé en ce que les couronnes (29, 30, 31, 32) sont des constituants formés séparément avec des aubages individuels.

10. Equipement moteur selon la revendication 1, caractérisé en ce que le dispositif (15) pour l'admission du fluide liquide sur le côté intérieur du cylindre (11) comporte des buses de pulvérisation (35, 36).

11. Equipement moteur selon les revendications 1 et 10, caractérisé en ce que le dispositif (15) comprend une pompe centrifuge (39) rapportée sur une des parois frontales (34) du cylindre (11).

12. Equipement moteur selon les revendications 10 et 11, caractérisé en ce que des canaux (37, 38) de la pompe centrifuge (39) débouchant dans le cylindre (11) sont reliés aux buses de pulvérisation (34, 35).

13. Equipement moteur selon les revendications 10 à 12, caractérisé en ce que la pompe centrifuge (39) est intégrée au cylindre (11).

14. Equipement moteur selon les revendications 1 et 11, caractérisé en ce que le cylindre (11) comporte au voisinage de l'autre paroi frontale (41) un surchauffeur de vapeur.

15. Equipement moteur selon la revendication 14, caractérisé en ce que le surchauffeur de vapeur (42) est formé par un noyau (43) s'étendant transversalement au cylindre (11) prévu localement, qui comporte au voisinage de la surface extérieure (44) plusieurs passages axiaux (45).

16. Equipement moteur selon la revendication 15, caractérisé en ce que le noyau (43) est muni sur le côté faisant face à l'une des parois frontales (34) d'une cavité (46) avantageusement en forme d'auge.

17. Equipement moteur selon les revendications 15 et 16, caractérisé en ce qu'un espace est prévu entre l'autre paroi frontale (41) et le noyau (43).

18. Equipement moteur selon la revendication 1, caractérisé en ce que l'unité de turbine à vapeur (12) est formée de deux rotors (48, 49) contrarotatif, en vertu de quoi le premier rotor (48) est relié au cylindre (11) et comporte des tuyères de détente (52, 53) agissant en direction de la périphérie, et le second rotor (49) est sous forme d'une turbine radiale qui est attaquée à partir du côté intérieur par la vapeur provenant des tuyères de détente (52, 53) du rotor (48).

19. Equipement moteur selon les revendications 2 et 18, caractérisé en ce qu'est prévu entre le cylindre (11) et l'unité de turbine à vapeur (12) une paroi transversale de séparation (17) qui comporte un palier (19) pour le cylindre (11).

20. Equipement moteur selon les revendications 2 et 18, caractérisé en ce qu'au voisinage de l'unité de turbine à vapeur (12) sur le carter (14) est apportée une paroi d'obturation (56) qui comporte un palier (55) pour le second rotor (49).

21. Equipement moteur selon les revendications 1, 2 et 18, caractérisé en ce qu'un condenseur à mélange (61) est monté après l'unité de turbine à vapeur (12).

22. Equipement moteur selon la revendication 21, caractérisé en ce que le condenseur à mélange (61) comporte une chambre (26) disposée dans le carter (14) qui d'un côté est reliée au moins à une buse de pulvérisation (60) du fluide de refroidissement et de l'autre côté est reliée à un canal de sortie pour le mélange condensat-fluide de refroidissement.

23. Equipement moteur selon la revendication 1, caractérisé en ce que le fluide liquide est prélevé sur le liquide de refroidissement du moteur à combustion interne.

24. Equipement moteur selon les revendications 1 et 23, caractérisé en ce qu'une canalisation (69) conduisant le fluide liquide au dispositif (15) est baignée au moins localement (70) par les gaz d'échappement du moteur à combustion interne.

25. Equipement moteur selon la revendication 1, caractérisé en ce que le dispositif (15) d'admission du fluide liquide coopère avec un régulateur (63).

26. Equipement moteur selon la revendication 25, caractérisé en ce que le régulateur (63) coopère avec une pompe (68).

27. Equipement moteur selon les revendications 25 et 26, caractérisé en ce que le paramètre de régulation est la température des gaz d'échappement (Ta) à la sortie de l'unité de turbine à chaleur perdue (3), une température de consigne (Ts) étant préterminée en fonction de la position d'un organe de régulation de la puissance du moteur à combustion interne.

28. Equipement moteur selon la revendication 1, caractérisé en ce que la transmission de puissance du cylindre (11) au moteur à combustion interne (2) a lieu directement et entre l'unité de turbine à vapeur (12) et le moteur à combustion interne par l'intermédiaire d'un système d'engrenages (72).

29. Equipement moteur selon la revendication 2, caractérisé en ce que le carter (14) est constitué d'un alliage d'aluminium qui comporte sur son côté intérieur un revêtement (14') en matériau réfractaire tel que de la céramique.

Fig.1

Fig.2

EP 0 134 905 B1

53

C

54

Fig.3

49

50

48

51

D

52

Ts

50%    100%

Fig.4

54'

72

Fig.5